# EUROPÄISCHE PATENTSCHRIFT

(11) **EP 1 422 121 B1**
(45) Veröffentlichungstag und Bekanntmachung des Hinweises auf die Patenterteilung: **12.12.2007**
(21) Anmeldenummer: 03025878.4
(22) Anmeldetag: 12.11.2003
(51) Int. Cl.: B62B 3/06, B62B 5/06

(54) **Deichsel für Handgabelhubwagen**
Towbar for hand pallet truck
Timon pour transpalette à fourche à bras

(30) Priorität: 20.11.2002 DE 10254030
(43) Veröffentlichungstag der Anmeldung: 26.05.2004
(73) Patentinhaber: Jungheinrich Aktiengesellschaft, 22047 Hamburg (DE)
(72) Erfinder: Rogg, Andreas, 23554 Lübeck (DE); Niebuhr, Michael, 22941 Bargteheide (DE)
(74) Vertreter: Hauck Patent- und Rechtsanwälte

(56) Entgegenhaltungen:
- EP-A- 1 186 511
- DE-A1- 2 257 175
- DE-U1- 29 710 503

## Beschreibung

Die Erfindung bezieht sich auf eine Deichsel für einen Handgabelhubwagen nach Patentanspruch 1.

Bei derzeit gebräuchlichen Handgabelhubwagen wird die Deichsel zum Lenken und Bewegen des Fahrzeugs sowie zum Pumpen für das Heben der Last benutzt. Zur Bedienung des Hubwerks, insbesondere zum Absenken, ist ein Bedienungselement notwendig, das gut zugänglich sein soll und die Umschaltung zwischen den Funktionen Heben und Fahren ermöglicht und ein feinfühliges Senken der Last erlaubt.

Eine gute Erreichbarkeit des Bedienelements ist für ein effektives Arbeiten mit dem Handgabelhubwagen besonders wichtig, wenn das Fahrzeug gezogen wird, d.h. die Deichsel sich in geneigter Stellung vor dem Fahrzeug befindet. Das Betätigen der Funktionen bei aufrecht stehender Deichsel, z.B. wenn das Fahrzeug geschoben wird, ist dagegen weniger wichtig, da das Fahrzeug in den meisten Fällen aus der Palette herausgezogen und dafür die Deichsel wieder in die geneigte Stellung gebracht wird.

Für das Pumpen und das Bewegen des Fahrzeugs ist es vorteilhaft, wenn der Deichselgriff mittig greifbar ist, um unnötige Lenk- und Reibungskräfte zu vermeiden. Dabei sollen die Betätigungskräfte am Bedienelement in allen Situationen möglichst klein sein, wofür ein größerer Betätigungsweg notwendig ist, z.B. mit einem großen Abstand des Kreispunktes vom Hebeldrehpunkt erreichbar sein.

Es ist bekannt, eine einen Griff durchsetzende Verlängerung der Deichselstange als Lagerbauteil für einen seitlich erstreckten Betätigungshebel zu verwenden. Nachteilig bei dem bekannten Deichselgriff ist, dass er nicht mittig erfasst werden kann. Aus der oberbegriffsmäßigen DE 297 10 503 U1 ist ferner bekannt, am oberen Ende des Stangenabschnitts, der sich in den Griff hineinerstreckt, einen Steuerhebel schwenkbar zu lagern. Der Hebel muss vom Bediener fortgedrückt werden, um ein Absenken der Last zu bewerkstelligen. Ein Ziehen des Hebels zum Bediener hin schaltet die Hebenfunktion ein. Nachteilig ist bei dieser Konstruktion, dass der Bediener die Funktionen nicht gut betätigen kann, wenn er das Fahrzeug zieht, da der Steuerhebel nach oben gezogen werden muss, um ein Absenken zu bewirken. Zudem ist das Bedienelement für eine intuitive Bedienung weniger geeignet, da das Bedienelement nicht von anderen technischen Geräten her vertraut ist. Die Bedienkräfte sind groß aufgrund des geringen Abstands des Kreispunkts vom Hebeldrehpunkt.

Der Erfindung liegt die Aufgabe zugrunde, eine Deichsel für einen Handgabelhubwagen zu schaffen, der intuitiv bedienbar und bei dem ein mittiges Greifen des Deichselrohres möglich ist, wobei die Bedienkräfte möglichst klein sind.

Diese Aufgabe wird durch die Merkmale des Patentanspruchs 1 gelöst.

Bei der erfindungsgemäßen Deichsel ist auf jeder Seite des Halteansatzes ein Bedienhebel angeordnet. Die Bedienhebel sind in einer Ebene verschwenkbar, welche vom Griff aufgespannt wird. Dadurch sind die Hebel durch den schleifenförmigen Griff gegen unbeabsichtigte Betätigung geschützt.

Die Bedienhebel wirken gemeinsam auf ein Verstellelement ein, das mit einem Zugoder Druckelement verbunden ist. Das Zugelement ist z.B. ein Seil. Das Druckelement kann von einer Stange gebildet sein. Das Zug- oder Druckelement wird üblicherweise in der hohl ausgeführten Deichselstange geführt und ist mit einer Funktionseinheit im Hubwagen verbunden, um den Absenkvorgang zu bewerkstelligen und die Hebenfunktion einzustellen. Das Stellelement wird seinerseits von den Bedienhebeln betätigt über die Zwischenschaltung eines Kopplungsmechanismus. Die Funktion der Bedienhebel ist derart, dass ein Ziehen an den Bedienhebeln aus einer Neutralstellung heraus den Senkvorgang bewirkt. Ein Drücken der Hebel in Richtung Deichselstange bzw. auf diese zu aus der Neutralstellung heraus bewirkt die Einschaltung des Hebenvorgangs. Der Kopplungsmechanismus ist derart ausgeführt, dass der Absenkvorgang durch Ziehen eines einzelnen Bedienhebels oder beider Bedienhebel gleichzeitig in Gang gesetzt wird. Der Hebenvorgang wird hingegen eingeschaltet durch das Drücken eines einzelnen Hebels oder auch wiederum beider Betätigungs- oder Bedienhebel.

Bei der erfindungsgemäßen Deichsel ist eine Betätigung der Hub- und Senkfunktionen des Handgabelhubwagens mit einer von beiden Händen oder auch mit beiden Händen möglich, wobei die Betätigungsrichtung sinnfällig zur Handhabung des Hubwagens angepasst ist.

Durch die Betätigung der Senkfunktion wird nicht nur diese ausgelöst, vielmehr wird durch das Ausmaß der Auslenkung die Senkgeschwindigkeit eingestellt. Da, wie erwähnt, der Absenkvorgang auch durch Ziehen beider Bedienhebel bewirkt wird, ist nach einer Ausgestaltung der Erfindung vorgesehen, dass der am weitesten gezogene Bedienhebel die Absenkgeschwindigkeit bestimmt. Hieraus ergibt sich, dass das Ziehen der Bedienhebel unabhängig voneinander ist. So kann zum Beispiel der eine Bedienhebel in der Neutralstellung verbleiben, wenn der andere gezogen wird.

Bei der Einleitung des Hubvorgangs, der durch ein Pumpen mit der Deichsel bewerkstelligt wird, werden die Bedienhebel entweder einzeln oder auch zusammen betätigt, d.h. vom Bediener fort bzw. auf die Deichselstange zu gedrückt. Hierbei sind die Bedienhebel jedoch zweckmäßigerweise miteinander so gekoppelt, dass bei Betätigung des einen Bedienhebels der andere mit verschwenkt wird. Dadurch ist für den Bediener eindeutig erkennbar, welche Funktion gerade eingestellt ist.

Aufgrund einer fehlerhaften Bedienung ist auch denkbar, dass der eine Hebel gezogen und der andere Bedienhebel gedrückt wird. Für diesen Fall sieht die Erfindung vor, dass diejenige Funktion betätigt wird, für die die größere Kraft aufgewendet wird. Wird z.B. der eine Bedienhebel stärker gedrückt als der andere gezogen wird, wird die Hubfunktion betätigt. Im umgekehrten Fall wird die Senkfunktion initiiert.

Es sind verschiedene konstruktive Möglichkeiten denkbar, den Kopplungsmechanismus zu realisieren. Eine besteht erfindungsgemäß darin, dass das Verstellelement, das mit dem Zug- oder Druckelement gekoppelt ist, linear bewegbar gelagert ist und einen Zahnstangenabschnitt aufweist mit einer Zahnung auf gegenüberliegenden Seiten. Die Bedienhebel weisen jeweils einen gezahnten Abschnitt auf, der mit jeweils einer Zahnung des Zahnstangenabschnitts zusammenwirkt. Die Ausbildung der Zähne am Zahnabschnitt der Hebel einerseits und an der Zahnstange andererseits ist derart, dass die oben beschriebene Funktion bei der Betätigung der Bedienhebel gewährleistet ist.

Um die Bedienkräfte möglichst klein zu halten, ist ein langer Hebelweg von Nutzen. Daher sieht eine Ausgestaltung der Erfindung vor, dass die inneren Endabschnitte der Bedienhebel sich im Bereich des Halteansatzes kreuzen und ihr Schwenkpunkt jeweils auf der gegenüberliegenden Seite des Verstellelements angeordnet ist. Auf diese Weise erhalten die Hebel eine maximale Länge, was der Minimierung der Betätigungskraft zugute kommt.

Nach einer weiteren Ausgestaltung der Erfindung ist vorgesehen, dass der Ansatz ein aus zwei Schalen gebildetes Gehäuse aufweist, dessen Trennebene in der oder parallel zur Schwenkebene der Bedienhebel liegt, wobei die Schwenkpunkte der Bedienhebel im Gehäuse angeordnet sind. Das Gehäuse weist auf gegenüberliegenden Seiten Schlitze auf, durch welche sich die Bedienhebel nach außen erstrecken.

Die Erfindung soll nachfolgend anhand eines in Zeichnungen dargestellten Ausführungsbeispiels näher erläutert werden.
- Fig. 1: zeigt die Draufsicht auf einen Abschnitt einer Deichselstange und eines damit verbundenen Griffs eines Handgabelhubwagens.
- Fig. 2: zeigt einen Schnitt durch die Darstellung nach Fig. 1 entlang der Linie 2-2.
- Fig. 3: zeigt einen Schnitt durch den Halteansatz und die Bedienhebel des Griffes nach Fig. 1 in einer ersten Betriebsposition.
- Fig. 4: zeigt eine ähnliche Darstellung wie Fig. 3, jedoch bei gezogenen Bedienhebeln.
- Fig. 5: zeigt eine ähnliche Darstellung wie Fig. 3 oder 4, wobei ein Bedienhebel gezogen und der andere in der Ruhestellung ist.
- Fig. 6: zeigt eine ähnliche Darstellung wie die Figuren 3 und 4, wobei beide Bedienhebel in der gedrückten Position sind.

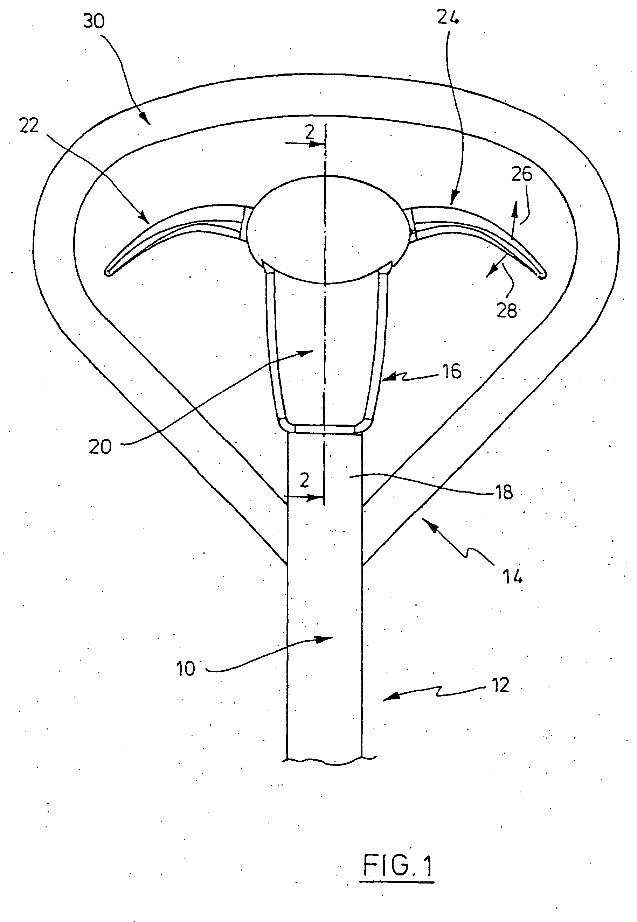

In Fig. 1 ist eine Stange 10 einer allgemein mit 12 bezeichneten Deichsel zu erkennen. Die Deichsel ist nur mit dem Abschnitt 10 sowie einem schleifenförmigen Griff 14 dargestellt. Die Deichselstange 10 ist am anderen Ende mit dem Lagerbock eines gelenkten Rades eines nicht gezeigten Handgabelhubwagens verbunden bzw. an diesen angelenkt, damit der Handgabelhubwagen entsprechend manipuliert werden kann. Der Handgabelhubwagen enthält wie üblich eine Pumpe zum Anheben des Lasthebemittels sowie eine Ventilanordnung zum Absenken des Lasttragmittels.

Der Griff 14 wird wie üblich von einem entsprechend gebogenen Rohr gebildet, das eine Ebene aufspannt, durch welche auch die Achse der Stange 10 sich erstreckt. Die Stange 10 setzt sich in das Innere des Griffes 14 fort, wodurch ein Halteansatz 16 gebildet ist. Dieser setzt sich zusammen aus einem Rohrabschnitt 18 und einem Gehäuse 20, das auf den Rohrabschnitt 18 aufgesteckt und darauf befestigt ist. Einzelheiten hierzu werden nachfolgend noch beschrieben.

Im Gehäuse sind zwei Bedienhebel 22, 24 angelenkt zur Betätigung der Hub- und Senkfunktion des nicht gezeigten Handgabelhubwagens. Einzelheiten dieser Hebel 22, 24 sowie deren Lagerung gehen aus den weiteren Figuren hervor.

Wie sich aus den Pfeilen 26, 28 ergibt, können die Hebel zu beiden Richtungen in einer Ebene geschwenkt werden, welche im Wesentlichen mit der Ebene des Griffes 14 zusammenfällt oder parallel dazu verläuft. Man erkennt außerdem, dass das Gehäuse 20 bzw. der Ansatz 16 vom hinteren Abschnitt 30 des Griffes 14 einen Abstand hat, sodasss der hintere Abschnitt des Griffes 14 in jeder Lage von Hand erfasst werden kann.

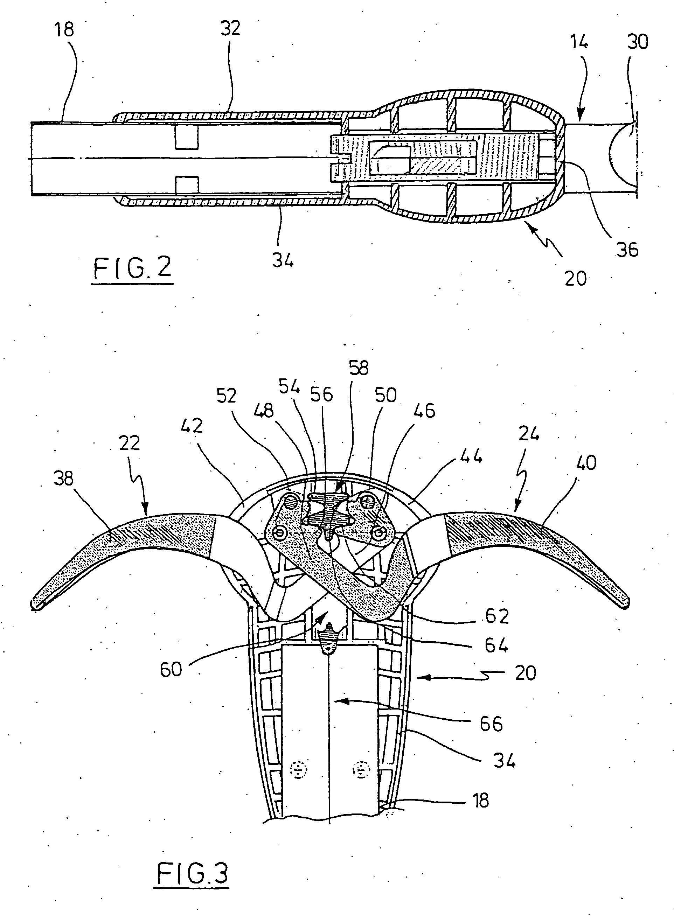

Wie aus Fig. 2 hervorgeht, besteht das Gehäuse 20 aus einer oberen Schale 32 und einer unteren Schale 34, deren Trennebene 36 in der Mittenebene des Griffes 14 verläuft. Im linken Bereich bildet das Gehäuse 20 einen Muffenabschnitt, in welchen der Rohrabschnitt 18 eingesteckt ist, um das Gehäuse 20 zu befestigen.

Wie aus Fig. 3 und auch in den folgenden Figuren zu erkennen, sind die gleich geformten Bedienhebel 22, 24 schwach S-förmig. Die bogenförmigen Betätigungsabschnitte 38, 40 der Bedienhebel 22, 24 erstrecken sich durch seitliche Schlitze 42, 44 des Gehäuses 20 nach außen. Die Biegung der Abschnitte 38, 40 ist derart, dass die konvexe Seite dem Bediener und die konkave der Deichselstange zugekehrt ist, wie sich auch ohne weiteres aus den Zeichnungen ergibt. Ein innerer gegensinnig gebogener Abschnitt 46, 48 der Bedienhebel 22, 24 ist über einen Schwenkpunkt 50 bzw. 52 im Gehäuse 20 schwenkbar gelagert. Die Lagerung erfolgt z.B. mit Hilfe eines Lagerstiftes, welcher sich durch ein Loch des Abschnitts 46, 48 hindurcherstreckt. Das Loch ist nahezu am Ende des Abschnitts 46, 48 angebracht.

Die Bedienhebel 22, 24, die in Fig. 3 in ihrer neutralen Position dargestellt sind, können sowohl in Fig. 3 nach oben als auch nach unten verschwenkt werden. Eine Begrenzung der Verschwenkung ist vorgesehen, aber nicht im Einzelnen dargestellt.

Wie ferner aus Fig. 3 und den weiteren Figuren hervorgeht, weist jeder Hebelabschnitt 46, 48 einen gezahnten Abschnitt mit zwei Zähnen 54, 56 auf. Der gezahnte Abschnitt beider Hebelabschnitte 46, 48 wirkt zusammen mit einem Zahnstangenabschnitt 58, der an einem Verstellelement 60 angebracht ist, das in der Achse der Stange 10 im Gehäuse 20 linear bewegbar gelagert ist. Der Zahnstangenabschnitt 48 weist auf gegenüberliegenden Seiten jeweils zwei Zähne 62, 64 auf, die mit den zugeordneten Zähnen 54, 56 der Hebelabschnitte 46, 48 zusammenwirken.

Mit dem entgegengesetzten Ende des Verstellelements 60 ist ein Zugseil 66 verbunden, das mit entsprechenden Steuerorganen im Handgabelhubwagen verbunden ist.

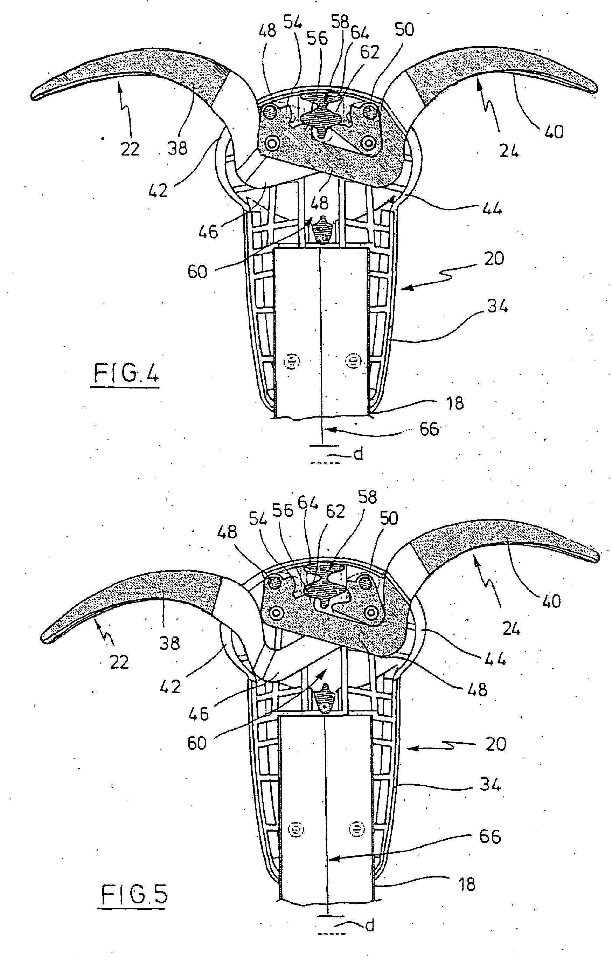

Anhand der Figuren 4 bis 6 soll die Funktion des gezeigten Hebelmechanismus zur Betätigung des Seilzugs 66 erläutert werden.

Wird ein Hebel etwa nach Fig. 4 in Richtung Pfeil nach 26 verschwenkt, d.h. zum Bediener bzw. Griffabschnitt 30 hin, wird der Zahnstangenabschnitt 58 durch den Zahn 56 in Richtung Bediener verstellt. Dadurch wird auf das Seil 66 eine Zugbewegung ausgeübt, wobei der Verstellweg in Fig. 1 durch den Abstand d zwischen der gestrichelten und der ausgezogenen Linie angedeutet ist. Die gestrichelte Linie bedeutet die neutrale Position, wie sie in Fig. 3 dargestellt ist. Wie zu erkennen, wird die gleiche Funktion erhalten, wenn beide Hebel 22, 24 gezogen werden. Wird ein Hebel weiter gezogen als der andere, dann ist der Verstellweg des am weitesten gezogenen Hebels ausschlaggebend. Das Ausmaß der Auslenkung des Zugelements 66 bestimmt die Absenkgeschwindigkeit des Lasttragmittels des nicht gezeigten Handgabelhubwagens.

Wird der gezogene Hebel losgelassen, kehrt er durch eine geeignete Rückstellvorrichtung in die Neutralposition nach Fig. 3 zurück. Hierfür können an geeignetem Ort Federmittel vorgesehen werden. Es ist auch denkbar, die Hebel 22, 24 in der Neutralstellung leicht zu verrasten, um bei einer geringen Berührung die Auslösung einer Funktion zu vermeiden.

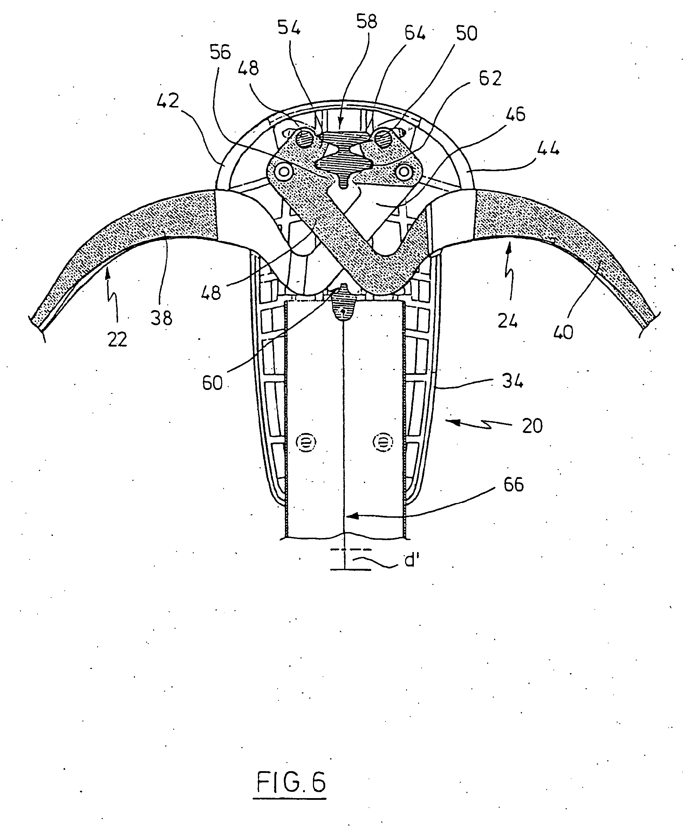

Fig. 5 zeigt, dass beim Verschwenken des Hebels 24 zwecks Auslösung einer Senkfunktion der Hebel 22 in seiner Neutralstellung verbleibt. Die Bedienhebel 22, 24 sind im Hinblick auf die Senkfunktion unabhängig voneinander.

Wird ein Hebel 22 oder 24 gemäß Fig. 6 gedrückt, d.h. von der Bedienungsperson fort verschwenkt, wird dadurch das Verstellelement 60 in die gleiche Richtung bewegt. Dadurch wird die Hubfunktion initiiert. Der "Hub" des Seils 66 relativ zur neutralen Position ist mit d' bezeichnet. Nunmehr kann durch "Pumpen" mit der Deichselstange 10 das Heben des Lasttragmittels bewerkstelligt werden.

Der Eingriff der Zähne 54, 56 in der Zahnung des Zahnstangenabschnitts 58 ist nun derart, dass eine durch die Betätigung eines Hebels verursachte Verstellung des Zahnstangenabschnitts 58 zugleich eine Verschwenkung des anderen Hebels herbeiführt. Die Betätigung eines Bedienhebels 22, 24 in Richtung vom Bediener fort führt daher zu einer synchronen Verstellung beider Hebel. Mithin können auch beide Hebel naturgemäß betätigt werden. Aufgrund dieser synchronen Verstellung kann der Fahrer erkennen, in welcher Betriebsstellung die Bedienvorrichtung ist.

Es ist auch denkbar, dass an einem Bedienhebel gezogen und am anderen gedrückt wird. Aus den Zeichnungen ergibt sich, dass dann diejenige Funktion zum Tragen kommt, auf deren Hebel die größere Kraft aufgebracht wird.

Ist jedoch wie in Fig. 5 gezeigt der eine Hebel 24 gezogen, würde ein Drücken des Hebels 22 nicht möglich sein, da, wie aus den Figuren 4 und 5 deutlich wird, eine Blockierung dieses Hebels 22 durch den Hebel 24 erfolgt, indem Zähne entsprechend ineinandergreifen.

## Patentansprüche

1. Deichsel für Handgabelhubwagen, mit einer Deichselstange (10), die am unteren Ende an einem Halter für ein lenkbares Rad angelenkt und am anderen Ende mit einem schleifenartigen Griff (14) verbunden ist, der am hinteren Ende auch mittig ergreifbar ist, einer Bedienvorrichtung innerhalb des Griffes, die an einem in Verlängerung der Stange in den Griff hineinerstreckten Halteansatz (16) angebracht und über ein Zug- und/oder Druckelement (66) mit einer Hubvorrichtung des Handgabelhubwagens verbindbar ist, **dadurch gekennzeichnet, dass** auf jeder Seite des Ansatzes (16) ein Bedienhebel (22, 24) angeordnet ist, die im Wesentlichen in der vom Griff (14) aufgespannten Ebene am Halteansatz (16) schwenkbar gelagert sind, dass beide Bedienhebel (22, 24) auf ein gemeinsames mit dem Zug- oder Druckelement (66) verbundenes Verstellelement (60) im Betrieb so einwirken, dass ein Ziehen an den Bedienhebeln (22, 24) aus einer Neutralstellung heraus von der Deichselstange (10) fort einen Senkvorgang bewirkt und ein Drücken an den Bedienhebeln aus der Neutralstellung heraus auf die Deichselstange (10) einen Hebevorgang der Hubvorrichtung ermöglicht, und dass die Bedienhebel (22, 24) über einen Kopplungsmechanismust derart verknüpft sind, dass der Absenkvorgang durch ein Ziehen eines einzelnen Bedienhebels (22, 24) oder beider Bedienhebel (22, 24) gleichzeitig und der Hebenvorgang durch ein Drücken eines einzelnen Bedienhebels (22, 24) oder beider Bedienhebel (22, 24) bewirkt wird.

2. Deichsel nach Anspruch 1, **dadurch gekennzeichnet, dass** das Ausmaß der Verschwenkung der Bedienhebel (22, 24) die Geschwindigkeit des Absenkvorgangs bestimmt und der Kopplungsmechanismus so ausgeführt ist, dass der am weitesten gezogene Bedienhebel (22, 24) die Absenkgeschwindigkeit bestimmt.

3. Deichsel nach Anspruch 1 oder 2, **dadurch gekennzeichnet, dass** der Kopplungsmechanismus so ausgelegt ist, dass ein Bedienhebel (22, 24) in der Neutralstellung verbleibt, wenn der andere gezogen wird.

4. Deichsel nach einem der Ansprüche 1 bis 3, **dadurch gekennzeichnet, dass** der Kopplungsmechanismus so ausgeführt ist, dass bei Verstellung der Bedienhebel in Druckrichtung und in die Neutralstellung zurück beide Bedienhebel (22, 24) synchron bewegt werden, auch wenn nur ein Hebel betätigt wird.

5. Deichsel nach einem der Ansprüche 1 bis 4, **dadurch gekennzeichnet, dass** der Kopplungsmechanismus so ausgeführt ist, dass diejenige Funktion (Senken oder Heben) bei gegensinniger Betätigung der Bedienhebel (22, 24) ausgelöst wird, auf welchen Bedienhebel die größere Kraft aufgebracht wird.

6. Deichsel nach einem der Ansprüche 1 bis 5, **dadurch gekennzeichnet, dass** das Verstellelement (60) linear bewegbar ist und einen Zahnstangenabschnitt (58) aufweist mit einer Zahnung (64, 62) auf gegenüberliegenden Seiten und die Bedienhebel (22, 24) jeweils einen gezahnten Abschnitt aufweisen, der mit jeweils einer Zahnung des Zahnstangenabschnitts (58) zusammenwirkt.

7. Deichsel nach Anspruch 6, **dadurch gekennzeichnet, dass** die inneren Endabschnitte (46, 48) der Bedienhebel (22, 24) sich im Bereich des Halteansatzes (16) kreuzen und ihr Schwenkpunkt (48, 50) jeweils auf der gegenüberliegenden Seite des Verstelleleinents (60) angeordnet ist.

8. Deichsel nach einem der Ansprüche 1 bis 7, **dadurch gekennzeichnet, dass** der Halteansatz (60) ein aus zwei Schalen (32, 34) gebildetes Gehäuse (20) aufweist, dessen Trennebene in der oder parallel zur Schwenkebene der Bedienhebel (22, 24) liegt und in dem die Bedienhebel (22, 24) und das Verstellelement (60) gelagert sind, wobei das Gehäuse (20) an den Seiten Schlitze (42, 44) aufweist, durch die sich die Bedienhebel (22, 24) nach außen erstrecken.

9. Deichsel nach Anspruch 8, **dadurch gekennzeichnet, dass** die Gehäuseschalen (32, 34) einen Muffenabschnitt aufweisen, in den ein Rohrabschnitt (18) des Halteansatzes (16) eingesteckt ist.

10. Deichsel nach einem der Ansprüche 1 bis 9, **dadurch gekennzeichnet, dass** der Kupplungsmechanismus eine Rückstellung der Bedienhebel bewirkt, sobald die auf den jeweiligen Bedienhebel wirkende Betätigungskraft entfällt und ein Verrasten in der Neutralstellung oder in Stellung "Hebenfunktion" bewirkt.

11. Deichsel nach einem der Ansprüche 1 bis 10, **dadurch gekennzeichnet, dass** Halteansatz und Deichselstange einstückig ausgebildet sind.

## Claims

1. A pole for a hand pallet truck comprising:
a pole bar (10) linked to a support for a steerable wheel at its lower end and connected to a loop-shaped handle (14) at the other end, the handle being centrally grippable at its rear end,
an operating device within the handle, the operating device being attached to a holding extension (16) projecting into the handle in prolongation of the bar, and being connectable to a lifting apparatus of the hand pallet truck via a traction and/or pushing element (66),
**characterized in that** an operating lever (22, 24) is disposed on either side of the extension (16), the operating levers being pivotally mounted on the holding extension (16) in a plane defined by the handle (14), **in that** both operating levers (22, 24) act on a common displacement element (60) connected to the traction or pushing element (66) in service such that pulling the operating levers (22, 24) out of a neutral position away from the pole bar (10) causes a lowering operation and pushing the operating levers out of the neutral position towards the pole bar (10) allows a lifting operation of the lifting apparatus, and **in that** the operating levers (22, 24) are coupled by means of a coupling mechanism such that the lowering operation is effected by pulling either one single operating lever (22, 24) or both operating levers (22, 24) at the same time, and the lifting operation is effected by pushing either one single operating lever (22, 24) or both operating levers (22, 24).

2. The pole of claim 1, wherein the extent of pivotal movement of the operating levers (22, 24) determines the speed of the lowering operation and the coupling mechanism is designed such that the operating lever (22, 24) pulled furthest determines the lowering speed.

3. The pole according to claim 1 or 2, wherein the coupling mechanism is designed such that one operating lever (22, 24) remains in the neutral position if the other one is being pulled.

4. The pole according to one of the claims 1 to 3, wherein the coupling mechanism is designed such that, when displacing the operating levers in pushing direction and back to the neutral position, both operating levers (22, 24) are moved synchronously, even if only one lever is being actuated.

5. The pole according to one of the claims 1 to 4, wherein the coupling mechanism is designed such that, when the operating levers (22, 24) are actuated in opposite directions, the function triggered (lowering or lifting) is the one corresponding to the operating lever on which the greater force is exerted.

6. The pole according to one of the claims 1 to 5, wherein the displacement element (60) is linearly movable and has a toothed rack portion (58) including a toothing (64, 62) on opposing sides and the operating levers (22, 24) each have a toothed portion cooperating with one toothing of the toothed rack portion (58).

7. The pole of claim 6, wherein the inner end portions (46, 48) of the operating levers (22, 24) cross each other in the region of the holding extension (16) and their pivot points (48, 50) are disposed on the respective opposite sides of the displacement element (60).

8. The pole according to one of the claims 1 to 7, wherein the holding extension (60) has a housing (20) formed by two shells (32, 34), the dividing plane of the housing being disposed in or parallel to the pivoting plane of operating levers (22, 24), wherein the operating levers (22, 24) and the displacement element (60) are mounted in the housing, the housing (20) having slots (42, 44) in the sides through which the operating levers (22, 24) project to the outside.

9. The pole of claim 8, wherein the housing shells (32, 34) have a socket portion receiving a tube portion (18) of the holding extension (16).

10. The pole according to one of the claims 1 to 9, wherein the coupling mechanism effects a restoration of the operating levers as soon as the actuating force acting on the respective operating lever lapses and also effects a locking in the neutral position or in the position of the "lifting function".

11. The pole according to one of claims 1 to 10, wherein the holding extension and the pole bar are made in one piece.

## Revendications

1. Timon pour chariot élévateur à fourche manuel, comprenant une tige de timon (10) qui est reliée, à son extrémité inférieure, à une monture pour une roue orientable et, à son autre extrémité, à une poignée en forme de boucle (14), qui peut aussi être saisie en son milieu à l'extrémité arrière, un dispositif de commande placé dans la poignée, qui est fixé à un embout de support (16) engagé dans la poignée dans le prolongement de la tige et qui peut être relié à un dispositif élévateur du chariot élévateur à fourche manuel par l'intermédiaire d'un élément de traction et/ou de pression, **caractérisé en ce que**, sur chaque côté de l'embout (16), est disposé un levier de commande (22, 24) qui est monté sur l'embout de support avec possibilité de pivoter sensiblement dans le plan sous-tendu par la poignée (14), **en ce qu'**en service, les deux leviers de commande (22, 24) agissent sur un élément de réglage commun (60) relié à l'élément de traction ou de pression (66) de telle manière qu'une traction exercée sur les leviers de commande (22, 24) en partant d'une position neutre et en s'éloignant de la tige (10) du timon, provoque une opération d'abaissement et qu'une pression exercée sur les leviers de commande en partant d'une position neutre et en se dirigeant vers la tige (10) du timon permet une opération d'élévation du dispositif élévateur et **en ce que** les leviers de commande (24, 22) sont interconnectés de telle manière que l'opération d'abaissement soit provoqué par une traction exercée sur un seul levier de commande (22, 24) ou sur les deux leviers de commande (22, 24) simultanément et que l'opération d'élévation soit provoquée par une pression exercée sur un seul levier de commande (22, 24) ou sur les deux leviers de commande (22, 24).

2. Timon selon la revendication 1, **caractérisé en ce que** l'amplitude du pivotement des leviers de commande (22, 24) détermine la vitesse de l'opération d'abaissement et le mécanisme d'accouplement est réalisé de telle manière que le levier de commande (22, 24) qui est tiré le plus loin détermine la vitesse d'abaissement.

3. Timon selon la revendication 1 ou 2, **caractérisé en ce que** le mécanisme d'accouplement est réalisé de manière qu'un levier de commande (22, 24) reste dans la position neutre lorsque l'autre est tiré.

4. Timon selon une des revendications 1 à 3, **caractérisé en ce que** le mécanisme d'accouplement est réalise de telle manière que, lorsqu'on déplace les leviers de commande dans le sens de la pression et qu'on les ramène à la position neutre, les deux leviers de commande (22, 24) soient déplacés en synchronisme, même lorsqu'un seul levier est actionné.

5. Timon selon une des revendications 1 à 4, **caractérisé en ce que** le mécanisme d'accouplement est réalisé de telle manière que la fonction (abaissement ou élévation) qui est déclenchée lorsqu'on actionne les leviers de commande (22, 24) l'un en sens inverse de l'autre soit celle correspondant au levier de commande sur lequel la plus grande force est appliquée.

6. Timon selon une des revendications 1 à 5, **caractérisé en ce que** l'élément de réglage (60) peut être mis en mouvement linéaire et présente un segment formant crémaillère (58), qui possède une denture (64, 62) sur des côtés opposés et les leviers de commande (22, 24) présentent chacun un segment denté qui coopère avec une denture respective du segment formant crémaillère (58).

7. Timon selon la revendication 6, **caractérisé en ce que** les segments terminaux intérieurs (46, 48) des leviers de commande (22, 24) se croisent dans la région de l'embout de support (16) et que le point de pivotement (48, 50) de chacun est disposé de l'autre côté de l'élément de réglage (60).

8. Timon selon une des revendications 1 à 7, **caractérisé en ce que** l'embout de support (60) présente un boîtier (20) formé de deux coquilles (32, 34) dont le plan de joint se trouve dans le plan de pivotement des leviers de commande (22, 24) ou parallèlement à ce plan, et dans lequel le levier de commande (22, 24) et l'élément de réglage (60) sont montés, le boîtier (20) présentant sur le côté des fentes (42, 44) à travers lesquelles les leviers de commande (22, 24) s'étendent vers l'extérieur.

9. Timon selon la revendication 8, **caractérisé en ce que** les coquilles (32, 34) du boîtier présente un segment formant emboîture dans lequel un segment tubulaire (18) de l'embout de support (16) est emboîté.

10. Timon selon une des revendications 1 à 9, **caractérisé en ce que** le mécanisme d'accouplement provoque le rappel des leviers de commande dès que la force d'actionnement qui agit sur le levier de commande concerné disparaît, et provoque un encliquetage dans la position neutre ou dans la position "fonction élévation".

11. Timon selon une des revendications 1 à 10, **caractérisé en ce que** l'embout de support et la tige du timon sont en une seule pièce.
